# EUROPEAN PATENT APPLICATION

(11) **EP 4 550 533 A1**
(43) Date of publication of application: **07.05.2025**
(21) Application number: 22962291.5
(22) Date of filing: 17.10.2022
(51) Int. Cl.: H01M 50/102, H01M 50/593, H01M 50/531

(54) **BATTERY CELL, BATTERY AND ELECTRIC APPARATUS**

(71) Applicant: Contemporary Amperex Technology (Hong Kong) Limited, Central, Hong Kong (CN)
(72) Inventor: WANG, Liqin, Ningde, Fujian 352100 (CN); LI, Quankun, Ningde, Fujian 352100 (CN)
(74) Representative: Behr, Wolfgang
(86) International application number: PCT/CN2022/125681
(87) International publication number: WO 2024/082093

(57) **Abstract**

Embodiments of this application provide a battery cell, a battery, and an electric device. The battery cell includes: a first wall, where the first wall is provided with a first limiting structure; and an insulating structure, where the insulating structure is disposed on a side of the first wall facing the interior of the battery cell, and the insulating structure is provided with a second limiting structure corresponding to the first limiting structure. The second limiting structure and the first limiting structure cooperate with each other to prevent relative movement between the insulating structure and the first wall. The battery cell, battery, and electric device according to the embodiments of this application can improve the processing efficiency of battery cells.

## Description

### TECHNICAL FIELD

This application relates to the field of battery technologies, and in particular, to a battery cell, a battery, and an electric device.

### BACKGROUND

Energy conservation and emission reduction are crucial to sustainable development of the automobile industry. In this context, electric vehicles, with their advantages in energy conservation and environmental protection, have become an important part of sustainable development of the automobile industry. For electric vehicles, battery technology is an important factor in connection with their development. In the rapid development of battery technologies, how processing and production efficiency of batteries is improved is an urgent technical problem to be resolved in battery technologies.

### SUMMARY

Embodiments of this application provide a battery cell, a battery, and an electric device, so as to improve the processing efficiency of battery cells.

According to a first aspect, a battery cell is provided, including: a first wall, where the first wall is provided with a first limiting structure; and an insulating structure, where the insulating structure is disposed on a side of the first wall facing the interior of the battery cell, and the insulating structure is provided with a second limiting structure corresponding to the first limiting structure. The second limiting structure and the first limiting structure cooperate with each other to prevent relative movement between the insulating structure and the first wall.

Therefore, in the battery cell according to the embodiments of this application, the first wall is provided with the first limiting structure, the insulating structure is provided with the second limiting structure, and the first limiting structure and the second limiting structure cooperate with each other, which can prevent or limit relative movement between the first wall and the insulating structure. In this way, the first wall and the insulating structure can be positioned to facilitate their installation. In addition, misalignment between the first wall and the insulating structure can be prevented, which ensures the performance of the insulating structure for insulating the first wall from other components in the battery cell, thereby preventing short circuit and improving the safety performance of the battery cell.

In some embodiments, the first limiting structure includes a first protrusion structure of the first wall protruding toward the insulating structure; and the second limiting structure includes a first groove structure of the insulating structure; where an opening of the first groove structure faces the first wall, and the first protrusion structure is at least partially accommodated in the first groove structure; and/or the first limiting structure includes a second groove structure of the first wall; an opening of the second groove structure faces the insulating structure; the second limiting structure includes a second protrusion structure of the insulating structure protruding toward the first wall; and the second protrusion structure is at least partially accommodated in the second groove structure.

That the first limiting structure and the second limiting structure cooperate with each other may include that the first protrusion structure is at least partially accommodated in the first groove structure, such that the first groove structure can limit movement of the first protrusion structure; and/or may include that the second protrusion structure is at least partially accommodated in the second groove structure, such that the second groove structure can limit movement of the second protrusion structure. In this way, movement of the first wall with respect to the insulating structure can be limited to achieve positioning and fixation effects, thereby preventing misalignment between the first wall and the insulating structure. In addition, the foregoing arrangement manner is simple, and the structure is stable, which facilitates processing.

In some embodiments, the first protrusion structure is a groove of the first wall that is recessed toward the insulating structure and that protrudes from a surface of the first wall facing the interior of the battery cell; and/or the second protrusion structure is a groove of the insulating structure that is recessed toward the first wall and that protrudes from a surface of the insulating structure far away from the interior of the battery cell.

Compared with a manner of directly disposing a solid protrusion structure on the surface of the first wall or on the surface of the insulating structure, a manner of configuring the first protrusion structure and/or the second protrusion structure as a groove can effectively reduce the weight of the first wall and/or the insulating structure, and a simple processing manner is achieved. For example, the first protrusion structure and the first groove structure can be synchronously processed through punching, or the second protrusion structure and the second groove structure can be synchronously processed through punching, improving the processing efficiency of the battery cell.

In some embodiments, the first groove structure protrudes from a surface of the insulating structure facing the interior of the battery cell; and/or the second groove structure protrudes from a surface of the first wall facing away from the interior of the battery cell.

The first groove structure of the insulating structure is configured to protrude from the surface of the insulating structure facing the interior of the battery cell, so depth of the first groove structure is slightly limited by thickness of the insulating structure. Therefore, although the thickness of the insulating structure is limited, the depth of the first groove structure may be greater than the thickness of the insulating structure, such that more portions of the first protrusion structure can be accommodated in the first groove structure, so as to improve the stability of the first protrusion structure and the first groove structure, thereby improving the stability of the first limiting structure and the second limiting structure. Similarly, the second groove structure of the first wall is configured to protrude from the surface of the first wall facing away from the interior of the battery cell, so the depth of the second groove structure is slightly limited by the thickness of the first wall. Therefore, although the thickness of the first wall is limited, the depth of the second groove structure may be greater than the thickness of the first wall, such that more portions of the second protrusion structure can be accommodated in the second groove structure, so as to improve the stability of the second protrusion structure and the second groove structure, thereby improving the stability of the first limiting structure and the second limiting structure.

In some embodiments, the battery cell further includes an electrode terminal disposed on the first wall, where the first wall is provided with a first through hole; the insulating structure is provided with a second through hole corresponding to the first through hole; and the electrode terminal runs through the first through hole and the second through hole, such that the first wall and the insulating structure are riveted.

This facilitates processing and fixation of the electrode terminal, the first wall, and the insulating structure. However, the riveting function of the electrode terminal can limit relative translation between the first wall and the insulating structure but cannot prevent relative rotation between the first wall and the insulating structure. Therefore, the first limiting structure and the second limiting structure can cooperate with each other to further prevent the relative rotation between the first wall and the insulating structure, thereby preventing misalignment between the first wall and the insulating structure.

In some embodiments, the battery cell further includes a connecting member configured to be electrically connected to the electrode terminal, where the connecting member is disposed on a side of the insulating structure facing the interior of the battery cell; the connecting member is provided with a third through hole corresponding to the second through hole; and the electrode terminal runs through the third through hole, such that the connecting member, the insulating structure, and the first wall are riveted. The processing procedure is simple, helping to improve the processing efficiency of the battery cell.

In some embodiments, the connecting member further includes a third limiting structure. The third limiting structure and the second limiting structure cooperate with each other to prevent relative movement between the connecting member and the insulating structure. This can fix the connecting member so as to facilitate assembly of the battery cells and can also guarantee electrical isolation between the first wall and the connecting member via the insulating structure, thereby preventing short circuit between the connecting member and the first wall.

In some embodiments, the third limiting structure includes a fourth through hole of the connecting member. The fourth through hole is used for accommodating at least a portion of the second limiting structure. In this way, as compared with a case in which the third limiting structure is configured as a groove, the fourth through hole can reduce space occupied by a bottom wall of the groove and improve utilization of space inside the battery cell, and can also reduce the weight of the connecting member. Accordingly, the weight of the battery cell can be reduced, thereby improving the performance of the battery cell. In addition, the first groove structure of the insulating structure is disposed between the inner wall of the fourth through hole and the first protrusion structure. This can further prevent short circuit between the connecting member and the first wall.

In some embodiments, the battery cell further includes: a sealing structure disposed on a side of the first wall facing away from the interior of the battery cell. The sealing structure is configured to electrically isolate the electrode terminal from the first wall. The sealing structure is provided with a fifth through hole. The fifth through hole is at least partially accommodated in the first through hole. The electrode terminal runs through the fifth through hole, such that the electrode terminal and the first through hole are sealed.

The sealing structure is typically made of an insulating material. Therefore, arranging the sealing structure between the first wall and the electrode terminal can prevent short circuit between the electrode terminal and the first wall. In addition, the first wall is provided with the first through hole and the insulating structure is provided with the second through hole, so a gap may be present between the electrode terminal and the first through hole and between the electrode terminal and the second through hole. Therefore, the first through hole and the second through hole can be sealed by the sealing structure. For example, during riveting and extrusion, the sealing structure deforms due to extrusion to implement sealing, so as to prevent leakage of an internal electrolyte.

In some embodiments, the electrode terminal is a positive electrode terminal.

In some embodiments, in a length direction of the first wall, a value range of a ratio of a distance between the electrode terminal and the first limiting structure to length of the first wall is [10%, 48%]. If the ratio is excessively large, in the length direction of the first wall, the distance between the first limiting structure and the electrode terminal is excessively large, while the excessively large distance from the first limiting structure to the electrode terminal makes the first limiting structure fail to effectively limit the relative movement between the first wall and the insulating structure during installation of the electrode terminal, which affects the processing efficiency of the battery cell. On the contrary, if the ratio is excessively small, the distance between the first limiting structure and the electrode terminal is excessively small, while the excessively small distance from the first limiting structure to the electrode terminal may probably affect the installation of the electrode terminal. For example, the first wall is provided with the first through hole for accommodating at least a portion of the electrode terminal, and if the distance between the first limiting structure and the electrode terminal is excessively small, a distance from the first limiting structure to the first through hole is also excessively small and they may affect each other, which in turn affects the structural strength and stability of the first wall, thereby reducing the installation efficiency of the battery cell and increasing the processing difficulty.

In some embodiments, in a width direction of the first wall, a value range of a ratio of a size of the first limiting structure to width of the first wall is [15%, 95%]. If the ratio is excessively large, the first limiting structure has an excessively large size in the width direction of the first wall, which increases the processing difficulty of the first limiting structure, and the first limiting structure may probably affect another wall intersecting with the first wall. On the contrary, if the ratio is excessively small, the first limiting structure has an excessively small size in the width direction of the first wall. As the width of the first wall is limited, the first limiting structure with a small size increases the processing difficulty of the first limiting structure, and it is also difficult for the first limiting structure with a small size to limit the relative movement between the first wall and the insulating structure.

In some embodiments, the battery cell further includes: a housing body, where the housing body is a hollow structure with an opening; and a cover plate, where the cover plate is configured to cover the opening of the housing body so as to form an internal accommodating chamber, and the accommodating chamber may be configured to accommodate an electrode assembly.

In some embodiments, the cover plate is a largest wall of the battery cell, which facilitates installation of components in the battery cell. For example, this may facilitate installation of an electrode assembly in the battery cell, thereby accelerating the processing of the battery cell.

In some embodiments, a pressure relief mechanism is provided on the cover plate, or the pressure relief mechanism is disposed at a wall opposite the cover plate to be actuated when a pressure or temperature in the battery cell reaches a predetermined threshold, so as to relieve the pressure or temperature in the battery cell.

In some embodiments, the pressure relief mechanism is an L-shaped indentation provided on a surface of the battery cell facing away from the interior of the battery cell. To be specific, the pressure relief mechanism has two portions that are interconnected and perpendicular to each other. In this way, when the internal temperature or pressure of the battery cell reaches the predetermined threshold, the pressure relief mechanism can be broken along any direction, such that the pressure relief mechanism can be broken in time to relieve the internal pressure and temperature of the battery cell in time, thereby preventing explosion of the battery cell. In addition, arranging the pressure relief mechanism on an outer surface of the cover plate prevents the electrolyte in the battery cell from being accumulated in the indentation and prevents the electrolyte from corroding the pressure relief mechanism, thereby improving the safety of the pressure relief mechanism.

In some embodiments, the first wall is a side wall of the housing body, and the side wall of the housing body is a wall adjacent to the opening of the housing body. This facilitates processing of the first limiting structure and the second limiting structure through the opening.

In some embodiments, the first wall is a smallest wall of the battery cell. Thus, under a condition that the area of the first wall is limited, the area of the insulating structure is also limited, and the first wall and the insulating structure can be rapidly positioned through the first limiting structure and the second limiting structure, thereby facilitating installation and improving the processing efficiency of the battery cell.

In some embodiments, the first wall is made of stainless steel and/or alloy, thereby allowing the first wall to have a high rigidness and guaranteeing the structural strength of the battery cell.

In some embodiments, a value range of thickness of the first wall is [50 µm, 200 µm] to guarantee the structural strength of the battery cell.

According to a second aspect, a battery is provided, including multiple battery cells according to the first aspect.

According to a third aspect, an electric device is provided, including the battery cell according to the first aspect, where the battery cell is configured to supply electrical energy to the electric device.

In some embodiments, the electric device is a vehicle, a ship, or a spacecraft.

### BRIEF DESCRIPTION OF DRAWINGS

FIG. 1 is a schematic structural diagram of a vehicle according to an embodiment of this application;
FIG. 2 is a schematic structural exploded view of a battery according to an embodiment of this application;
FIG. 3 is a schematic structural exploded view of a battery cell according to an embodiment of this application;
FIG. 4 is a schematic diagram of a partial cross section of a battery cell according to an embodiment of this application;
FIG. 5 is a schematic diagram of another partial cross section of a battery cell according to an embodiment of this application;
FIG. 6 is a schematic exploded view of a partial cross section of a battery cell according to an embodiment of this application;
FIG. 7 is a schematic diagram of an outer surface of a first wall of a battery cell according to an embodiment of this application;
FIG. 8 is a schematic diagram of a surface of a cover plate according to an embodiment of this application; and
FIG. 9 is a schematic diagram of a partial cross section of a cover plate according to an embodiment of this application.

The accompanying drawings are not drawn to scale.

### DESCRIPTION OF EMBODIMENTS

The following further describes implementations of this application in detail with reference to the accompanying drawings and embodiments. The following detailed description of the embodiments and the accompanying drawings are intended to illustrate the principle of this application rather than to limit the scope of this application, meaning this application is not limited to the embodiments described herein.

In the description of this application, it should be noted that, unless otherwise stated, "multiple" means at least two; and the orientations or positional relationships indicated by the terms "upper", "lower", "left", "right", "inside", "outside", and the like are merely for ease and brevity of description of this application rather than indicating or implying that the means or components mentioned must have specific orientations or must be constructed or manipulated according to particular orientations. These terms shall therefore not be construed as limitations on this application. In addition, the terms "first", "second", "third", and the like are merely for the purpose of description and shall not be understood as any indication or implication of relative importance. "Perpendicular" is not perpendicular in the strict sense but within an allowable range of error. "Parallel" is not parallel in the strict sense but within an allowable range of error.

The orientation terms appearing in the following description all are directions shown in the figures, and do not limit the specific structure of the application. In the descriptions of this application, it should be further noted that unless otherwise specified and defined explicitly, the terms "mounting", "connection", and "join" should be understood in their general senses. For example, the terms may be a fixed connection, a detachable connection, or an integrated connection, or may be a direct connection, or an indirect connection through an intermediate medium. Persons of ordinary skill in the art can understand specific meanings of these terms in this application as appropriate to specific situations.

In the embodiments of this application, like reference signs denote like components, and for brevity, in different embodiments, detailed descriptions of like components are not repeated. It should be understood that, as shown in the accompanying drawings, sizes such as thickness, length, and width of various components and sizes such as thickness, length, and width of integrated devices in the embodiments of this application are merely for illustrative purposes and should not constitute any limitations on this application.

In this application, the battery cell may be a primary battery or a secondary battery, for example, a lithium-ion battery, a lithium-sulfur battery, a sodium-lithium-ion battery, a sodium-ion battery, or a magnesium-ion battery. This is not limited in the embodiments of this application. The battery cell may be cylindrical, flat, cuboid, or of other shapes. This is not limited in the embodiments of this application either. Battery cells are typically divided into three types by packaging method: cylindrical cell, prismatic cell, and pouch cell. This is not limited in the embodiments of this application either.

The battery mentioned in the embodiments of this application is a single physical module that includes one or more battery cells for providing a higher voltage and capacity. For example, the battery mentioned in this application may include a battery module, a battery pack, or the like. Generally, a battery pack includes a box configured to package one or more battery cells. The box can prevent liquids or other foreign substances from affecting charging or discharging of the battery cell.

The battery cell includes an electrode assembly and an electrolyte. The electrode assembly includes a positive electrode plate, a negative electrode plate, and a separator. The battery cell mainly relies on migration of metal ions between the positive electrode plate and the negative electrode plate to work. The positive electrode plate includes a positive electrode current collector and a positive electrode active substance layer. The positive electrode active substance layer is applied on a surface of the positive electrode current collector. A current collector uncoated with the positive electrode active substance layer protrudes from the current collector coated with the positive electrode active substance layer, and the current collector uncoated with the positive electrode active substance layer serves as a positive electrode tab. A lithium-ion battery is used as an example, for which, the positive electrode current collector may be made of aluminum and the positive electrode active substance may be lithium cobaltate, lithium iron phosphate, ternary lithium, lithium manganate, or the like. The negative electrode plate includes a negative electrode current collector and a negative electrode active substance layer. The negative electrode active substance layer is applied on a surface of the negative electrode current collector. A current collector uncoated with the negative electrode active substance layer protrudes from the current collector coated with the negative electrode active substance layer, and the current collector uncoated with the negative electrode active substance layer serves as a negative electrode tab. The negative electrode current collector may be made of copper, and the negative electrode active substance may be carbon, silicon, or the like. To allow a large current to pass through without any fusing, multiple positive electrode tabs are provided and stacked together, and multiple negative electrode tabs are provided and stacked together. The separator may be made of polypropylene (polypropylene, PP), polyethylene (polyethylene, PE), or the like. In addition, the electrode assembly may be a winding structure or a laminated structure, but the embodiments of this application are not limited thereto.

For the development of battery technologies, many design factors need to be considered, for example, performance parameters such as energy density, cycle life, discharge capacity, and charge and discharge rate, as well as safety and processing efficiency of the battery. Typically, an insulating structure needs to be disposed between a housing of the battery cell and an electrode assembly inside the battery cell so as to prevent short circuit between the housing and a component in the battery cell, for example, to prevent short circuit between the housing and the electrode assembly or a connecting member in the battery cell. Especially when the housing is provided with another component, the insulating structure can be further configured to prevent short circuit between the component on the housing and the component in the battery cell.

Specifically, the housing of the battery cell includes a first wall. The first wall may be any wall of the housing body. Optionally, the first wall may be provided with at least one electrode terminal. The electrode terminal is configured to output energy of the battery cell. The first wall may further be provided with an electrolyte injection hole for injecting an electrolyte into the battery cell. Alternatively, the first wall may further be provided with another component. An insulating structure may further be provided on a side of the first wall facing the battery cell. The insulating structure may be configured to prevent short circuit between the first wall and the component in the battery cell, and the insulating structure can further prevent short circuit between a component on the first wall and the component in the battery cell.

However, directly stacking the insulating structure and the first wall is likely to cause misalignment between the insulating structure and the first wall, which in turn affects an insulation effect of the insulating structure on the first wall and the safety performance of the battery cell.

Therefore, the embodiments of this application provide a battery cell, a battery, and an electric device to resolve the foregoing problems. In the embodiments of this application, a first wall of the battery cell is provided with a first limiting structure; and an insulating structure is provided with a second limiting structure corresponding to the first limiting structure. In this way, the first limiting structure and the second limiting structure cooperate with each other to prevent relative movement between the insulating structure and the first wall. As a result, the first wall and the insulating structure can be positioned to facilitate their installation. In addition, misalignment between the insulating structure and the first wall can be prevented, which in turn guarantees the performance of the insulating structure for insulating the first wall from other components in the battery cell, preventing short circuit, and improving the safety performance of the battery cell.

For ease of description, the electric device being a vehicle is used as an example for description of the following embodiments.

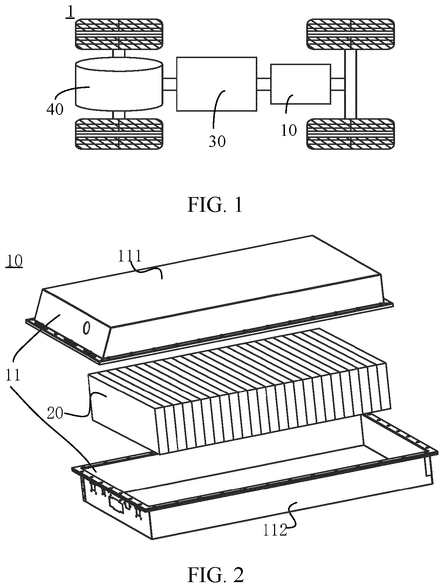

For example, FIG. 1 is a schematic structural diagram of a vehicle 1 according to an embodiment of this application. The vehicle 1 may be a fossil fuel vehicle, a natural-gas vehicle, or a new energy vehicle, where the new energy vehicle may be a battery electric vehicle, a hybrid electric vehicle, a range-extended vehicle, or the like. A motor 40, a controller 30, and a battery 10 may be disposed inside the vehicle 1, where the controller 30 is configured to control the battery 10 to supply power to the motor 40. For example, the battery 10 may be disposed at the bottom, front, or rear of the vehicle 1. The battery 10 may be configured to supply power to the vehicle 1. For example, the battery 10 may be used as an operational power source for the vehicle 1 for use in a circuit system of the vehicle 1, for example, to satisfy power needs of start, navigation, and running of the vehicle 1. In another embodiment of this application, the battery 10 can be used as not only the operational power source for the vehicle 1, but also as a driving power source for the vehicle 1, replacing or partially replacing fossil fuel or natural gas to provide driving traction for the vehicle 1.

To meet different power usage requirements, the battery may include multiple battery cells, and the multiple battery cells may be connected in series, parallel, or series-parallel, where being connected in series-parallel means a combination of series and parallel connections. The battery may also be called a battery pack. For example, multiple battery cells may be connected in series, parallel, or series-parallel to form a battery module first, and then multiple battery modules are connected in series, parallel, or series-parallel to form a battery. In other words, the multiple battery cells may be directly combined into a battery, or may first be combined into battery modules that are then combined into a battery.

For example, FIG. 2 is a schematic structural diagram of a battery 10 according to an embodiment of this application. The battery 10 may include multiple battery cells 20. The battery 10 may further include a box 11. Inside of the box 11 is a hollow structure. The multiple battery cells 20 are accommodated in the box 11. FIG. 2 shows a possible implementation of the box 11 in this of this application. As shown in FIG. 2, the box 11 may include two portions that are referred as a first portion 111 and a second portion 112 respectively, and the first portion 111 and the second portion 112 are snap-fitted. Shapes of the first portion 111 and the second portion 112 may be determined based on a shape of the combination of the battery cells 20. At least one of the first portion 111 and the second portion 112 is provided with an opening. For example, as shown in FIG. 2, the first portion 111 and the second portion 112 each may be a hollow cuboid and have only one surface with an opening, where an opening of the first portion 111 and an opening of the second portion 112 are opposite each other, and the first portion 111 and the second portion 112 are snap-fitted to form the box 11 having an enclosed chamber.

For another example, unlike FIG. 2, it is possible that only one of the first portion 111 and the second portion 112 is a hollow cuboid with an opening, and the other may be a plate for covering the opening. For example, an example in which the second portion 112 is a hollow cuboid and has only one surface with an opening and the first portion 111 is a plate is used herein. In this case, the first portion 111 covers the opening of the second portion 112 to form the box 11 with an enclosed chamber. The chamber may be configured for accommodating the multiple battery cells 20. The multiple battery cells 20 are connected in parallel, series, or series-parallel, and then put into the box 11 formed after the first portion 111 and the second portion 112 are snap-fitted.

In some embodiments, the battery 10 may further include other structures. Details are not described herein. For example, the battery 10 may further include a busbar, where the busbar is configured to implement an electrical connection between the multiple battery cells 20, for example, a parallel connection, a series connection, or a series-parallel connection. Specifically, the busbar may implement the electrical connection between the battery cells 20 by connecting electrode terminals of the battery cells 20. Further, the busbar may be fixed to the electrode terminals of the battery cells 20 by welding. Electrical energy of the multiple battery cells 20 may be further led out through a conductive mechanism that passes through the box 11.

Depending on different power needs, the battery cells 20 in the battery 10 may be provided in any quantity. The multiple battery cells 20 may be connected in series, parallel, or series-parallel to achieve a large capacity or power. Because the quantity of battery cells 20 included in each battery 10 may be large, for ease of installation, the battery cells 20 may be disposed in groups, and each group of battery cell 20 forms a battery module. The quantity of the battery cells 20 included in the battery module is not limited, and may be set as required. In addition, to increase a space occupancy rate of the battery cells 20 in the battery 10, installation directions of the battery cells 20 can be properly set based on the shapes of the multiple battery cells 20. Moreover, the installation directions of different battery cells 20 in the battery 10 may be the same or different. This is not limited in this embodiment of this application.

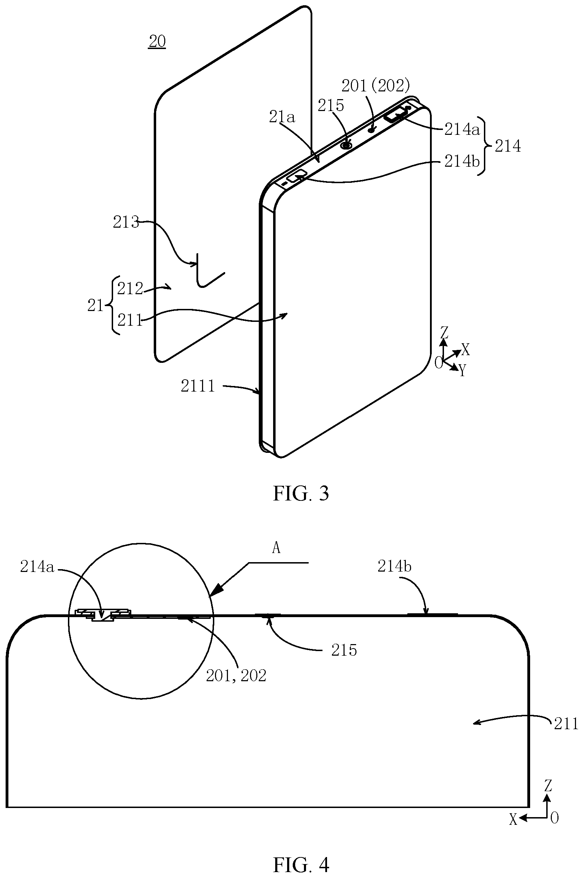

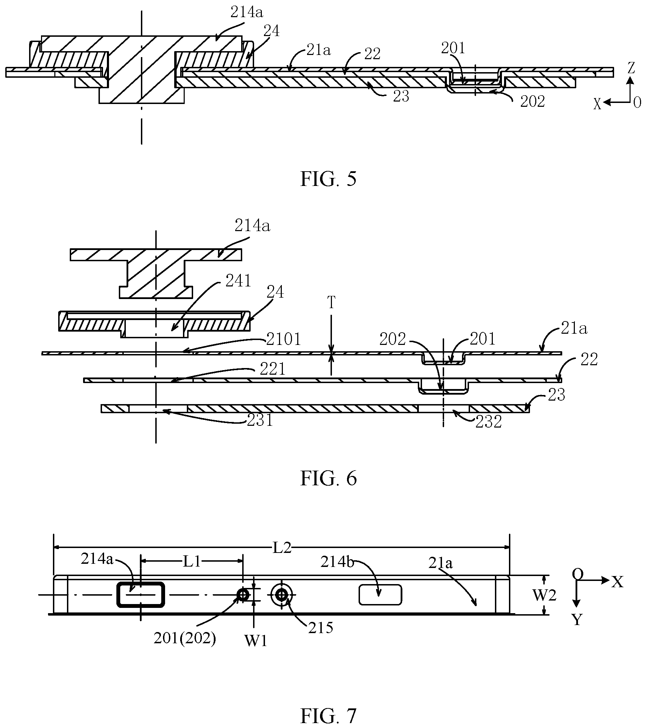

FIG. 3 is a schematic partial structural exploded view of a battery cell 20 according to an embodiment of this application. FIG. 4 is a schematic diagram of a partial cross section of a battery cell 20 according to an embodiment of this application, where the cross section is perpendicular to a thickness direction Y of the battery cell 20. FIG. 5 is an enlarged schematic diagram of a partial cross section of a battery cell 20 according to an embodiment of this application, for example, FIG. 5 is an enlarged view of region A shown in FIG. 4. FIG. 6 is a schematic exploded view of a partial cross section of a battery cell 20 according to an embodiment of this application. For example, FIG. 6 is a schematic structural exploded view of a portion of the battery cell 20 shown in FIG. 5.

As shown in FIG. 3 to FIG. 6, the battery cell 20 in these embodiments of this application includes: a first wall 21a, where the first wall 21a is provided with a first limiting structure 201; and an insulating structure 22, where the insulating structure 22 is disposed on a side of the first wall 21a facing the interior of the battery cell 20; the insulating structure 22 is provided with a second limiting structure 202 corresponding to the first limiting structure 201; and the second limiting structure 202 and the first limiting structure 201 cooperate with each other to prevent relative movement between the insulating structure 22 and the first wall 21a.

It should be understood that the shape of the battery cell 20 in these embodiments of this application may be set based on practical application. In other words, the battery cell 20 may be any polyhedral structure. Specifically, the battery cell 20 may include a housing 21. The housing 21 includes multiple walls. The multiple walls are configured to enclose a hollow polyhedral structure, such that the battery cell 20 is a polyhedral structure. The first wall 21a in these embodiments of this application may be any wall of the housing 21 of the battery cell 20. For example, if the battery cell 20 is a cuboid structure, the housing 21 may include six surfaces, that is, include six walls, where the first wall 21a may be a largest wall, a smallest wall, or another wall. However, these embodiments of this application are not limited thereto.

Specifically, for a rectangular battery cell 20, for ease of description, three reference directions are defined in the embodiments of this application. As shown in FIG. 3 to FIG. 6, a thickness direction of the battery cell 20 is direction Y, a height direction of the battery cell 20 is direction Z, and a width direction of the battery cell 20 is direction X, where the thickness direction Y, height direction Z, and width direction X of the battery cell 20 are perpendicular to each other.

In the embodiments of this application, the insulating structure 22 is disposed at a side of the first wall 21a facing the interior of the battery cell 20. To be specific, the insulating structure 22 and the first wall 21a are stacked in the thickness direction of the first wall 21a. In addition, a specific shape of the insulating structure 22 may be set based on practical application. For example, the insulating structure 22 may be a plate that can be attached to the first wall 21a, such that the first wall 21a is electrically isolated from a component in the battery cell 20. For example, the insulating structure 22 may be configured to electrically isolate the first wall 21a from an electrode assembly in the battery cell 20, so as to prevent short circuit.

In the embodiments of this application, the first wall 21a is provided with the first limiting structure 201, the insulating structure 22 is provided with the second limiting structure 202, and the first limiting structure 201 and the second limiting structure 202 cooperate with each other, thereby preventing or limiting relative movement between the first wall 21a and the insulating structure 22. In this way, the first wall 21a and the insulating structure 22 can be positioned to facilitate their installation. In addition, misalignment between the first wall 21a and the insulating structure 22 can be prevented, which in turn guarantees the performance of the insulating structure 22 for insulating the first wall 21a from other components in the battery cell 20, preventing short circuit, and improving the safety performance of the battery cell 20.

It should be understood that in the embodiments of this application, a cooperation manner of the first limiting structure 201 and the second limiting structure 202 may be flexibly set based on practical application. Examples are provided below for description with reference to the accompanying drawings.

Optionally, in an embodiment, the first limiting structure 201 includes a first protrusion structure of the first wall 21a protruding toward the insulating structure 22; the second limiting structure 202 includes a first groove structure of the insulating structure 22; where an opening of the first groove structure faces the first wall 21a, and the first protrusion structure is at least partially accommodated in the first groove structure. Specifically, as shown in FIG. 3 to FIG. 6, the first protrusion structure protruding toward the insulating structure 22 is disposed on the surface of the first wall 21a facing the insulating structure 22. Correspondingly, the first groove structure is disposed on the surface of the insulating structure 22 facing the first wall 21a, and the opening of the first groove structure faces the first wall 21a. In addition, the first limiting structure 201 includes the first protrusion structure, and the second limiting structure 202 includes the first groove structure. Therefore, that the first limiting structure 201 and the second limiting structure 202 cooperate with each other may include that the first protrusion structure is at least partially accommodated in the first groove structure, such that the first groove structure can limit movement of the first protrusion structure so as to limit movement of the first wall 21a with respect to the insulating structure 22, thereby implementing positioning and fixation and preventing misalignment between the first wall 21a and the insulating structure 22. In addition, the foregoing arrangement manner is simple, and the structure is stable, which facilitates processing.

Optionally, in another embodiment, the first limiting structure 201 includes a second groove structure of the first wall 21a; an opening of the second groove structure faces the insulating structure 22; the second limiting structure 202 includes a second protrusion structure of the insulating structure 22 protruding toward the first wall 21a; and the second protrusion structure is at least partially accommodated in the second groove structure. Specifically, in a direction opposite to an arrangement direction shown in FIG. 3 to FIG. 6, a surface of the first wall 21a facing the insulating structure 22 is provided with the second groove structure, and the opening of the second groove structure faces the insulating structure 22; and correspondingly, a surface of the insulating structure 22 facing the first wall 21a is provided with the second protrusion structure protruding toward the first wall 21a. The first limiting structure 201 may include the second groove structure, and the second limiting structure 202 may include the second protrusion structure. Therefore, that the first limiting structure 201 and the second limiting structure 202 cooperate with each other may include that the second protrusion structure is at least partially accommodated in the second groove structure, such that the second groove structure can limit movement of the second protrusion structure so as to limit movement of the insulating structure 22 with respect to the first wall 21a, thereby implementing positioning and fixation and preventing misalignment between the first wall 21a and the insulating structure 22. In addition, the foregoing arrangement manner is simple, and the structure is stable, which facilitates processing.

Optionally, in this embodiment of this application, the first limiting structure 201 may include at least one first protrusion structure and/or at least one second groove structure, and correspondingly the second limiting structure 202 may include at least one first groove structure and/or at least one second protrusion structure. However, the embodiments of this application are not limited thereto. For example, to reduce space of the first wall 21a occupied by the first limiting structure 201 and space of the insulating structure 22 occupied by the second limiting structure 202, the first limiting structure 201 may include one first protrusion structure or one second groove structure disposed on the first wall 21a, and correspondingly the second limiting structure 202 may include one first groove structure or one second protrusion structure disposed at the insulating structure 22, thereby facilitating processing.

Optionally, in this embodiment of this application, the arrangement manners of the first protrusion structure, first groove structure, second protrusion structure, and second groove structure may be flexibly selected based on practical application, so as to improve the processing efficiency of the battery cell 20.

For example, the first protrusion structure and the second protrusion structure can be implemented in a form of groove. The first protrusion structure is a groove of the first wall 21a that is recessed toward the insulating structure 22 and that protrudes from a surface of the first wall 21a facing the interior of the battery cell 20; and/or the second protrusion structure is a groove of the insulating structure 22 that is recessed toward the first wall 21a and that protrudes from a surface of the insulating structure 22 far away from the interior of the battery cell 20. Specifically, as shown in FIG. 3 to FIG. 6, the first wall 21a is recessed toward the insulating structure 22 to form the groove, and a bottom wall of the groove protrudes from the surface of the first wall 21a facing the interior of the battery cell 20 so as to serve as the first protrusion structure. Similarly, in a direction opposite the arrangement direction shown in FIG. 3 to FIG. 6, the insulating structure 22 is recessed toward the first wall 21a to form a groove, and a bottom wall of the groove protrudes from the surface of the insulating structure 22 facing away from the interior of the battery cell 20 so as to serve as the second protrusion structure. Compared with a manner of directly disposing a solid protrusion structure on the surface of the first wall 21a or on the surface of the insulating structure 22, a manner of configuring the first protrusion structure and/or the second protrusion structure as a groove can effectively reduce the weight of the first wall 21a and/or the insulating structure 22, and a simple processing manner is achieved. For example, the first protrusion structure and the first groove structure can be synchronously processed through punching, or the second protrusion structure and the second groove structure can be synchronously processed through punching, improving the processing efficiency of the battery cell 20.

Optionally, the first groove structure and the second groove structure may alternatively be disposed with reference to the first protrusion structure and the second protrusion structure. The first groove structure protrudes from a surface of the insulating structure 22 facing the interior of the battery cell 20; and/or the second groove structure protrudes from a surface of the first wall 21a facing away from the interior of the battery cell 20. The first groove structure of the insulating structure 22 is arranged to protrude from the surface of the insulating structure 22 facing the interior of the battery cell 20, so depth of the first groove structure is slightly limited by thickness of the insulating structure 22. Therefore, although the thickness of the insulating structure 22 is limited, the depth of the first groove structure may be greater than the thickness of the insulating structure 22, such that more portions of the first protrusion structure can be accommodated in the first groove structure, so as to improve the stability of the first protrusion structure and the first groove structure, thereby improving the stability of the first limiting structure 201 and the second limiting structure 202. Similarly, the second groove structure of the first wall 21a is arranged to protrude from the surface of the first wall 21a facing away from the interior of the battery cell 20, so depth of the second groove structure is slightly limited by thickness of the first wall 21a. Therefore, although the thickness of the first wall 21a is limited, the depth of the second groove structure may be greater than the thickness of the first wall 21a, such that more portions of the second protrusion structure can be accommodated in the second groove structure, so as to improve the stability of the second protrusion structure and the second groove structure, thereby improving the stability of the first limiting structure 201 and the second limiting structure 202.

It should be understood that if the first protrusion structure and the second protrusion structure are grooves, the thickness of the bottom wall of each groove may be less than or slightly greater than the thickness of the first wall 21a where this groove is located or the thickness of the insulating structure 22 where this groove is located. Alternatively, on the contrary, the first protrusion structure may be a relatively thick bump on the first wall 21a. For example, the thickness of the first protrusion structure is greater than the thicknesses of other regions of the first wall 21a where the first protrusion structure is located, allowing the first protrusion structure to protrude from the surface of the first wall 21a facing the insulating structure 22. Similarly, the second protrusion structure may alternatively be a relatively thick bump on the insulating structure 22. For example, the thickness of the second protrusion structure is greater than thicknesses of other regions of the insulating structure 22 where the second protrusion structure 22 is located, allowing the second protrusion structure to protrude from the surface of the insulating structure 22 facing the first wall 21a.

Optionally, under the condition that the first protrusion structure is a relatively thick bump, the first protrusion structure may be integrated with the first wall 21a. For example, the first protrusion structure may be formed on the first wall 21a through punching, milling, or the like. Alternatively, the first protrusion structure may be separated from the first wall 21a. For example, the first wall 21a is provided with a through hole, and the first protrusion structure is installed in the through hole through welding, riveting, clamping, or the like. This is not particularly limited in this application. Similar to the first protrusion structure, under the condition that the second protrusion structure is a relatively thick bump, the second protrusion structure may alternatively be integrated with or separated from the insulating structure 22. This is not particularly limited in this application.

It should be understood that the first wall 21a in this embodiment of this application may be further provided with another component. For example, the battery cell 20 further includes an electrode terminal 214 disposed on the first wall 21a, where the electrode terminal 214 is configured to be electrically connected to an electrode assembly in the battery cell 20, so as to output electric energy of the battery cell 20. Specifically, as shown in FIG. 3 to FIG. 6, the battery cell 20 may include at least two electrode terminals 214. The at least two electrode terminals 214 may include at least one positive electrode terminal 214a and at least one negative electrode terminal 214b. The positive electrode terminal 214a is configured to be electrically connected to a positive electrode tab of the electrode assembly, and the negative electrode terminal 214b is configured to be electrically connected to a negative electrode tab of the electrode assembly. The positive electrode terminal 214a may be directly or indirectly connected to the positive electrode tab. The negative electrode terminal 214b may be directly or indirectly connected to the negative electrode tab. For example, the positive electrode terminal 214a is electrically connected to the positive electrode tab 222a via a connecting member 23. The negative electrode terminal 214b is electrically connected to the negative electrode tab 222b via a connecting member 23.

It should be understood that different electrode terminals 214 may be located on a same wall or different walls of the battery cell 20. For example, as shown in FIG. 3 to FIG. 6, in these embodiments of this application, the electrode terminals 214 of the battery cell 20 being located on one wall is used as an example, in which the electrode terminals 214 may all be located on the first wall 21a. In addition, considering that the height of the positive electrode terminal 214a is typically greater than the height of the negative electrode terminal 214b, the positive electrode terminal 214a is mainly used as an example for describing the electrode terminal 214 below, but the embodiments of this application are not limited thereto.

Optionally, an arrangement manner of the electrode terminal 214 may be flexibly selected based on practical application. For example, the first wall 21a is provided with a first through hole 2101, the insulating structure 22 is provided with a second through hole 221 corresponding to the first through hole 2101, and the electrode terminal 214 runs through the first through hole 2101 and the second through hole 221, such that the first wall 21a and the insulating structure 22 are riveted. This facilitates processing and fixation of the electrode terminal 214, the first wall 21a, and the insulating structure 22. However, the riveting function of the electrode terminal 214 can limit relative translation between the first wall 21a and the insulating structure 22 but cannot prevent relative rotation between the first wall 21a and the insulating structure 22. Therefore, the first limiting structure 201 and the second limiting structure 202 can cooperate with each other to further prevent the relative rotation between the first wall 21a and the insulating structure 22, thereby preventing misalignment between the first wall 21a and the insulating structure 22.

It should be understood that since the housing 21 of the battery cell 20 is typically made of a metal material, if the electrode terminal 214 is in contact with the first wall 21a, short circuit may occur. Therefore, an insulating member may be disposed between the electrode terminal 214 and the first wall 21a to prevent short circuit. Specifically, the battery cell 20 further includes a sealing structure 24 disposed on a side of the first wall 21a facing away from the interior of the battery cell 20, where the sealing structure 24 is configured to electrically isolate the electrode terminal 214 from the first wall 21a; the sealing structure 24 is provided with a fifth through hole 241; the fifth through hole 241 is at least partially accommodated in the first through hole 2101; and the electrode terminal 214 runs through the fifth through hole 241, such that the electrode terminal 214 and the first through hole 2101 are sealed.

The sealing structure 24 is typically made of an insulating material. Therefore, arranging the sealing structure 24 between the first wall 21a and the electrode terminal 214 can prevent short circuit between the electrode terminal 214 and the first wall 21a. In addition, the sealing structure 24 is provided with the fifth through hole 241, and a wall of the fifth through hole 241 is at least partially located in the first through hole 2101; or further, the wall of the fifth through hole 241 may alternatively be at least partially located in the second through hole 221, such that under a condition that the electrode terminal 214 runs through the fifth through hole 241, a portion of the sealing structure 24 is disposed between the electrode terminal 214 and the first through hole 2101; or further, a portion of the sealing structure 24 may alternatively be disposed between the electrode terminal 214 and the second through hole 221. In this way, the first wall 21a is provided with the first through hole 2101 and the insulating structure 22 is provided with the second through hole 221, such that a gap may be present between the electrode terminal 214 and the first through hole 2101 and between the electrode terminal 214 and the second through hole 221. Therefore, the first through hole 2101 and the second through hole 221 can be sealed by the sealing structure 24. For example, during riveting and extrusion, the sealing structure 24 deforms due to extrusion to implement sealing, so as to prevent leakage of an internal electrolyte.

Optionally, the battery cell 20 further includes a connecting member 23 configured to be electrically connected to the electrode terminal 214. The connecting member 23 is disposed on a side of the insulating structure 22 facing the interior of the battery cell 20. The connecting member 23 is provided with a third through hole 231 corresponding to the second through hole 221, and the electrode terminal 214 runs through the third through hole 231, such that the connecting member 23, the insulating structure 22, and the first wall 21a are riveted. Specifically, as shown in FIG. 3 to FIG. 6, the connecting member 23 in this embodiment of this application may be configured to be electrically connected to the electrode terminal 214 and may alternatively be configured to be electrically connected to a tab of the electrode assembly, such that the electrode terminal 214 is electrically connected to the tab. The connecting member 23 is provided with the third through hole 231, and the first through hole 2101 of the first wall 21a, the second through hole 221 of the insulating structure 22, and the third through hole 231 of the connecting member 23 are sequentially stacked, such that the electrode terminal 214 can sequentially run through the first through hole 2101, the second through hole 221, and the third through hole 231, thereby implementing riveting and fixation of the first wall 21a, the insulating structure 22, and the connecting member 23. The processing procedure is simple, helping to improve the processing efficiency of the battery cell 20.

Optionally, the electrode terminal 214 and the connecting member 23 may alternatively be connected through welding so as to further improve the connection stability between the electrode terminal 214 and the connecting member 23, thereby guaranteeing the performance of the battery cell 20.

Optionally, the connecting member 23 further includes a third limiting structure 232, where the third limiting structure 232 and the second limiting structure 202 cooperate with each other to prevent relative movement between the connecting member 23 and the insulating structure 22. Specifically, the third limiting structure 232 of the connecting member 23 and the second limiting structure 202 cooperate with each other, to be specific, the first limiting structure 201, the second limiting structure 202, and the third limiting structure 232 can cooperate with each other to prevent relative movement between the first wall 21a, the insulating structure 22, and the connecting member 23. The connecting member 23 can be fixed so as to facilitate assembly of the battery cell 20 and also ensure that the insulating structure 22 electrically isolates the first wall 21a from the connecting member 23, thereby preventing short circuit between the connecting member 23 and the first wall 21a.

Optionally, an arrangement manner of the third limiting structure 232 may be flexibly set based on practical application. For example, the third limiting structure 232 may be correspondingly arranged based on the arrangement manners of the first limiting structure 201 and the second limiting structure 202. For example, if the first limiting structure 201 includes the first protrusion structure and the second limiting structure 202 includes the first groove structure, the first groove may protrude from the surface of the insulating structure 22 toward the connecting member 23, and correspondingly the third limiting structure 232 may include a groove or a through hole that is provided at the connecting member 23 and that has an opening facing the insulating structure 22 to accommodate at least a portion of the first groove structure, thereby implementing mutual cooperation between the third limiting structure 232 and the second limiting structure 202.

In an example shown in FIG. 3 to FIG. 6, the third limiting structure 232 includes a fourth through hole of the connecting member 23, where the fourth through hole is used for accommodating at least a portion of the second limiting structure 202. Specifically, the first limiting structure 201 may include the first protrusion structure of the first wall 21a, the second limiting structure 202 may include the first groove structure of the insulating structure 22, and the first groove structure protrudes from the surface of the insulating structure 22 facing the interior of the battery cell 20. Therefore, under a condition that the first groove structure can accommodate at least a portion of the first protrusion structure, the third limiting structure 232 may include a fourth through hole for accommodating at least a portion of the first groove structure. In this way, as compared with a case in which the third limiting structure 232 is configured as a groove, the fourth through hole can reduce space occupied by a bottom wall of the groove and improve utilization of space inside the battery cell 20, and can also reduce the weight of the connecting member 23. Accordingly, the weight of the battery cell 20 can be reduced, thereby improving the performance of the battery cell 20. In addition, the first groove structure of the insulating structure 22 is disposed between an inner wall of the fourth through hole and the first protrusion structure. This can further prevent short circuit between the connecting member 23 and the first wall 21a.

For another example, if the first limiting structure 201 includes the second groove structure, the second limiting structure 202 includes the second protrusion structure, and the second protrusion structure is a groove provided on the insulating structure 22, the third limiting structure 232 may include a third protrusion structure protruding toward the insulating structure 22. The third protrusion structure is at least partially accommodated in the second protrusion structure, so as to implement mutual cooperation between the third limiting structure 232 and the second limiting structure 202.

It should be understood that in this embodiment of this application, arrangement positions and sizes of the first limiting structure 201 and the second limiting structure 202 may be flexibly set based on practical application. For example, the size and position of the first limiting structure 201 are set based on a size of the first wall 21a, and the size and position of the second limiting structure 202 are set based on the size and position of the first limiting structure 202, such that the first limiting structure 201 and the second limiting structure 202 can cooperate with each other. The following uses the first wall 21a and the first limiting structure 201 as an example for description.

FIG. 7 is a schematic diagram of an outer surface of a first wall 21a of a battery cell 20 according to an embodiment of this application. The outer surface of the first wall 21a is a surface of the first wall 21a facing away from the interior of the battery cell 20. As shown in FIG. 7, in a length direction x of the first wall 21A, a value range of a ratio L1/L2 of a distance L1 between the electrode terminal 214 and the first limiting structure 201 to length L2 of the first wall 21a is [10%, 48%]. If the value of L1/L2 is excessively large, in the length direction X of the first wall 21a, the distance L1 between the first limiting structure 201 and the electrode terminal 214 is excessively large, while the excessively large distance from the first limiting structure 201 to the electrode terminal 214 makes the first limiting structure 201 fail to effectively limit relative movement between the first wall 21a and the insulating structure 22 during installation of the electrode terminal 214, which affects the processing efficiency of the battery cell 20. On the contrary, if the value of L1/L2 is excessively small, the distance L1 between the first limiting structure 201 and the electrode terminal 214 is excessively small, while the excessively small distance from the first limiting structure 201 to the electrode terminal 214 may probably affect the installation of the electrode terminal 214. For example, the first wall 21a is provided with the first through hole 2101 for accommodating at least a portion of the electrode terminal 214, and if the distance L1 between the first limiting structure 201 and the electrode terminal 214 is excessively small, a distance from the first limiting structure 201 to the first through hole 2101 is also excessively small and they may affect each other, which in turn affects the structural strength and stability of the first wall 21a, thus reducing the installation efficiency of the battery cell 20 and increasing the processing difficulty.

Therefore, the value of L1/L2 should not be excessively large or excessively small. For example, the value range of L1/L2 may be [10%, 48%] or [20%, 40%]. Alternatively, the value of L1/L2 may be set to 10%, 15%, 20%, 25%, 30%, 35%, 40%, or 45%.

It should be understood that as shown in FIG. 7, in this embodiment of this application, the distance L1 between the electrode terminal 214 and the first limiting structure 201 may alternatively represent: a distance between the center of the electrode terminal 214 and the center of the first limiting structure 201 in the length direction X of the first wall 21a. In addition, in the description that the distance L1 between the electrode terminal 214 and the first limiting structure 201, the electrode terminal 214 may represent any electrode terminal 214 on the first wall 21a. For example, L1 may be a distance between the first limiting structure 201 and an electrode terminal 214 that is closest to the first limiting structure 201. As shown in FIG. 7, if the electrode terminal 214 closest to the first limiting structure 201 is a positive electrode terminal 214a, L1 is a distance between the first limiting structure 201 and this positive electrode terminal 214a, but the embodiments of this application are not limited thereto.

Optionally, in a width direction Y of the first wall 21a, a value range of a ratio W1/W2 of a size W1 of the first limiting structure 201 to width W2 of the first wall 21a is [15%, 95%]. If the value of W1/W2 is excessively large, the first limiting structure 201 has an excessively large size W1 in the width direction Y of the first wall 21a, which increases the processing difficulty of the first limiting structure 201, and the first limiting structure 201 may probably affect another wall intersecting with the first wall 21a. On the contrary, if the value of W1/W2 is excessively small, the first limiting structure 201 has an excessively small size W1 in the width direction Y of the first wall 21a, and since the width W2 of the first wall 21a is limited, the first limiting structure 201 with a small size increases the processing difficulty of the first limiting structure 201, and it is also difficult for the first limiting structure 201 with a small size to limit the relative movement between the first wall 21a and the insulating structure 22.

Therefore, the value of W1/W2 should not be excessively large or excessively small. For example, the value range of W1/W2 may be [15%, 95%] or [20%, 40%]. Alternatively, the value of W1/W2 may be set to 15%, 20%, 25%, 30%, 35%, 40%, 45%, 50%, 55%, 60%, 65%, 70%, 75%, 80%, 85%, 90%, or 95%.

It should be understood that in this embodiment of this application, the length direction X of the first wall 21a is perpendicular to the width direction Y. In addition, the length L2 of the first wall 21a represents a size of the first wall 21a in the length direction X, and the width W2 of the first wall 21a represents a size of the first wall 21a in the width direction Y, where the length L2 of the first wall 21a is greater than the width W2 of the first wall 21a.

It should be understood that the foregoing mainly describes the first wall 21a of this embodiment of this application, and the following describes a housing 21 of a battery cell 20 of this embodiment of this application with reference to the accompanying drawings.

In this embodiment of this application, as shown in FIG. 3 to FIG. 7, the battery cell 20 further includes: a housing body 211, where the housing body 211 is a hollow structure with an opening 2111; and a cover plate 212, where the cover plate 212 is configured to cover the opening 2111 of the housing body 211.

Specifically, the housing 21 in this embodiment of this application may include the housing body 211 and the cover plate 212. The housing body 211 is a component for accommodating the electrode assembly. The housing body 211 may be a hollow structure with an opening formed in one end or in multiple ends. For example, if the housing body 211 is a hollow structure with an opening formed in one end, one cover plate 212 may be provided. If the housing body 211 is a hollow structure with openings formed in two opposite ends, two cover plates 212 may be provided, where the two cover plates 212 cover the openings in the two ends of the housing body 211 respectively.

For ease of description, the housing body 211 having one opening 2111 is used as an example in this embodiment of this application, and correspondingly, the cover plate 212 is configured to cover the opening 2111. Optionally, the cover plate 212 in this embodiment of this application covers the opening 2111 of the housing body 211. For example, the housing body 211 and the cover plate 212 can be hermetically connected through welding, so as to improve the sealing reliability.

Optionally, the cover plate 212 may be any one of walls of the battery cell 20. For example, the cover plate 212 is a largest wall of the battery cell 20, which facilitates installation of components in the battery cell 20, for example, may facilitate installation of the electrode assembly, thereby accelerating the processing of the battery cell 20.

Optionally, the housing body 211 may be of various shapes, such as cylinder, cuboid, or other polyhedrons. For example, as shown in FIG. 3 to FIG. 7, the housing body 211 being a cuboid structure is used as an example for description in this embodiment of this application.

It should be understood that the cover plate 212 in this embodiment of this application is a component configured to cover the opening 2111 of the housing body 211 so as to isolate an internal environment of the battery cell 20 from an external environment. The cover plate 212 may fit the housing body 211 in shape. As shown in FIG. 3 to FIG. 7, the housing body 211 is a cuboid structure, and the cover plate 212 is a rectangular plate structure that fits the housing body 211.

In the battery cell 20, the electrode assembly is a component in which electrochemical reactions take place in the battery cell 20. Specifically, the electrode assembly may include a tab and an electrode body, where the tab of the electrode assembly may include a positive electrode tab and a negative electrode tab. The positive electrode tab may be formed by stacking a portion of a positive electrode plate that is uncoated with a positive electrode active substance layer. The negative electrode tab may be formed by stacking a portion of a negative electrode plate that is uncoated with a negative electrode active substance layer. The electrode body may be formed by stacking or winding a portion of the positive electrode plate that is coated with the positive electrode active substance layer and a portion of the negative electrode plate that is coated with the negative electrode active substance layer.

It should be understood that there may be one or more electrode assemblies in the housing body 211 based on actual use requirements. The electrode assembly may be cylindrical, cuboid, or the like. If the electrode assembly is a cylindrical structure, the housing body 211 may also be a cylindrical structure. If the electrode assembly is a cuboid structure, the housing body 211 may also be a cuboid structure.

Optionally, the material of the housing 21 of this embodiment of this application may be flexibly set based on practical application. In addition, the material of the cover plate 212 and the material of the housing body 211 may be the same or different. For example, with the first wall 21a being used as an example, the first wall 21 is made of stainless steel and/or alloy, thereby allowing the first wall 21a to have a high rigidness and guaranteeing the structural strength of the battery cell 20. For another example, in this embodiment of this application, the housing body 211 may be made of various materials, such as copper, iron, aluminum, steel, and aluminum alloy. The cover plate 212 may be made of various materials as well, such as copper, iron, aluminum, steel, and aluminum alloy.

Optionally, the thickness of the housing 21 of this embodiment of this application may be flexibly set based on practical application. In addition, the thicknesses of different walls of the housing 21 may be the same or different. For example, the thickness of the cover plate 212 and the thickness of the housing body 211 may be the same or different. For example, as shown in FIG. 3 to FIG. 7, the first wall 21a is used as an example, in which a value range of thickness T of the first wall 21a is [50 µm, 200 µm] to guarantee the structural strength of the battery cell 20. For example, the thickness T of the first wall 21a may be set to 50 µm, 60 µm, 70 µm, 80 µm, 90 µm, 100 µm, 110 µm, 120 µm, 130 µm, 140 µm, 150 µm, 160 µm, 170 µm, 180 µm, 190 µm, or 200 µm.

Optionally, the first wall 21a in this embodiment of this application may be any wall of the housing 21. For example, as shown in FIG. 3 to FIG. 7, the first wall 21a is a side wall of the housing body 211. The side wall of the housing body 211 is a wall adjacent to the opening 2111 of the housing body 211. This can facilitate the processing of the first limiting structure 201 and the second limiting structure 202 through the opening 2111.

For another example, the first wall 21a is a smallest wall of the battery cell 20. Thus, under a condition that the area of the first wall 21a is limited, the area of the insulating structure 22 is also limited, and the first wall 21a and the insulating structure 22 can be rapidly positioned through the first limiting structure 201 and the second limiting structure 202, thereby facilitating installation and improving the processing efficiency of the battery cell 20.

It should be understood that connecting structures that are connected to each other may be present between the cover plate 212 and the side wall of the housing body 211. For example, an edge of the side wall of the housing body 211 surrounding the opening 2111 extends away from the interior of the battery cell 20, or the edge of the side wall of the housing body 211 surrounding the opening 2111 extends toward the interior of the battery cell 20, so as to be connected to the cover plate 212, for example, to be welded to the cover plate 212. In this case, the area of the first wall 21a of this embodiment of this application does not include the extension portion of the edge of the side wall.

Optionally, the housing 21 of this embodiment of this application may be further provided with another component. For example, the housing 21 may be further provided with an electrolyte injection hole and a sealing assembly 215 for sealing the electrolyte injection hole. For example, as shown in FIG. 3 to FIG. 7, the first wall 21a may be provided with an electrolyte injection hole and a sealing assembly 215 for sealing the electrolyte injection hole. The electrolyte injection hole may be used for injecting an electrolyte into the battery cell 20, and the sealing assembly 215 is configured to seal the electrolyte injection hole. For example, laser welding may be used for sealing, so as to improve the sealing reliability.

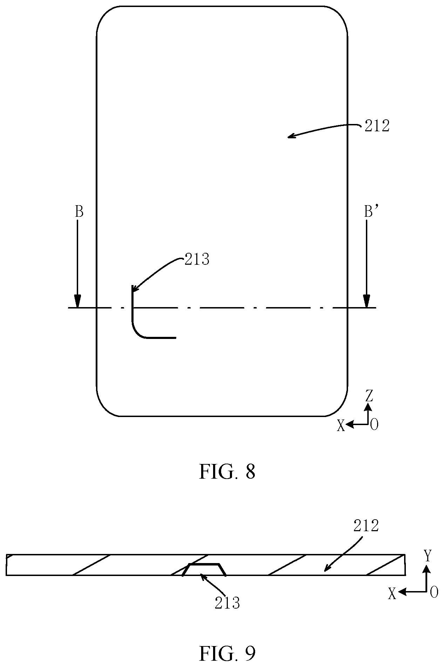

Optionally, the housing 21 of the battery cell 20 of this embodiment of this application may be further provided with a pressure relief mechanism 213. For example, a pressure relief mechanism 213 is provided on the cover plate 212. Alternatively, the pressure relief mechanism 213 is provided on a wall opposite the cover plate 212. Alternatively, the pressure relief mechanism is provided on another wall. For ease of description, the pressure relief mechanism 213 being disposed at the cover plate 212 is used as an example in this application, but relevant description is also applicable to cases in which the pressure relief mechanism 213 is disposed on another wall. For brevity, details are not repeated herein. Specifically, FIG. 8 is a schematic diagram of a surface of the cover plate 212 facing away from the interior of the battery cell 20 in this embodiment of this application. FIG. 9 is a schematic diagram of a partial cross section of the cover plate 212 in this embodiment of this application. For example, the schematic diagram of the cross section may be a partial schematic diagram of a cross section in B-B' direction shown in FIG. 8. As shown in FIG. 8 and FIG. 9, the pressure relief mechanism 213 may be disposed on the cover plate 212, and the pressure relief mechanism 213 is configured to actuate when internal pressure or temperature of the battery cell 20 reaches a predetermined threshold so as to relieve the internal pressure or temperature of the battery cell 20.

The predetermined threshold may be adjusted according to different design requirements. The predetermined threshold may depend on the material for one or more of a positive electrode plate, a negative electrode plate, an electrolyte, and a separator in the battery cell 20. "Actuate" mentioned in this application means that the pressure relief mechanism 213 is put into action such that the internal pressure and temperature of the battery cell 20 are relieved. The action that the pressure relief mechanism 213 is put into may include but is not limited to, for example, cracking, tearing, or melting at least part of the pressure relief mechanism 213. After the pressure relief mechanism 213 is actuated, high-temperature and high-pressure substances inside the battery cell 20 are discharged from the pressure relief mechanism 213 as emissions. In this way, the battery cell 20 can release its pressure under controllable pressure or temperature, thereby avoiding more serious potential accidents.

The emissions from the battery cell 20 mentioned in this application include but are not limited to: electrolyte, fragments of positive and negative electrode plates and separator that are dissolved or disrupted, and high-temperature and high-pressure gases and flames produced by reactions.

The pressure relief mechanism 213 in the battery cell 20 greatly influences the safety of the battery. For example, when the battery cell 20 is short-circuited, overcharged, or the like, thermal runaway may be caused inside the battery cell 20, resulting in a sudden rise in pressure or temperature. In this case, the pressure relief mechanism 213 can be actuated to release the internal pressure and temperature to the outside, thus preventing the battery cell 20 from exploding and catching fire.

Optionally, the pressure relief mechanism 213 of this embodiment of this application may be disposed at any one of walls of the housing 21 of the battery cell 20. For example, the pressure relief mechanism 213 being disposed at the cover plate 212 is used as an example in this embodiment of this application. In addition, the pressure relief mechanism 213 may be a part of the cover plate 212 or a structure separated from the cover plate 212 and fixed to the cover plate 212 through, for example, welding.

For example, the pressure relief mechanism 213 and the cover plate 212 may be separated structures. The pressure relief mechanism 213 may be in a form of an explosion-proof valve, a gas valve, a pressure relief valve, a safety valve, or the like, and may specifically employ an element or part sensitive to pressure or temperature. To be specific, when the internal pressure or temperature of the battery cell 20 reaches a predetermined threshold, the pressure relief mechanism 213 performs an action or a weak structure disposed in the pressure relief mechanism 213 is destroyed, thereby forming an opening or a channel for relieving the internal pressure or temperature.

For another example, when the pressure relief mechanism 213 is a part of the cover plate 212, for example, the pressure relief mechanism 213 may be formed by providing an indentation on the cover plate 212, in other words, the pressure relief mechanism 213 is an indentation of the cover plate 212. Therefore, thickness of a region where the indentation is located is less than thickness of another region other than the indentation in cover plate 212. The indentation is the weakest position of the pressure relief mechanism 213. When internal pressure of the housing body 211 rises and reaches a threshold due to too much gas produced by the battery cell 20, or when internal temperature of the battery cell 20 rises and reaches a threshold due to heat produced by internal reactions of the battery cell 20, the pressure relief mechanism 213 may crack at the indentation, causing the inside and the outside of the housing body 211 to be communicated and the gas pressure and temperature to be discharged out through the cracking of the pressure relief mechanism 213, thereby preventing explosion of the battery cell 20.

For example, as shown in FIG. 8 and FIG. 9, the pressure relief mechanism 213 is an L-shaped indentation provided on a surface of the battery cell 20 far away from the interior of the battery cell 20. For example, if the pressure relief mechanism 213 is located at the cover plate 212, the pressure relief mechanism 213 is an L-shaped indentation located on a surface of the cover plate 212 facing away from the interior of the battery cell 20. To be specific, the pressure relief mechanism 213 has two portions that are interconnected and perpendicular to each other. In this way, when the internal temperature or pressure of the battery cell 20 reaches the predetermined threshold, the pressure relief mechanism 213 can be broken along any direction, such that the pressure relief mechanism 213 can be broken in time to relieve the internal pressure and temperature of the battery cell 20 in time, thereby preventing explosion of the battery cell 20. In addition, arranging the pressure relief mechanism 213 on an outer surface of the cover plate 212 prevents the electrolyte in the battery cell 20 from being accumulated in the indentation and prevents the electrolyte from corroding the pressure relief mechanism 213, thereby improving the safety of the pressure relief mechanism 213.

Optionally, as shown in FIG. 9, when the pressure relief mechanism 213 in this embodiment of this application is an indentation, a cross section of the indentation may be an isosceles trapezoid. This not only facilitates processing but also can prevent stress concentration and improve the stability of the pressure relief mechanism 213 during normal use of the battery cell 20 as compared with a rectangular cross section.

In this embodiment of this application, the first wall 21a of the battery cell 20 is provided with the first limiting structure 201, the insulating structure 22 is provided with the second limiting structure 202, and the first limiting structure 201 and the second limiting structure 202 cooperate with each other, thereby preventing or limiting relative movement between the first wall 21a and the insulating structure 22. In this way, the first wall 21a and the insulating structure 22 can be positioned to facilitate their installation. In addition, misalignment between the first wall 21a and the insulating structure 22 can be prevented, which in turn guarantees the performance of the insulating structure 22 for insulating the first wall 21a from other components in the battery cell 20, thereby preventing short circuit and improving the safety performance of the battery cell 20.

Although this application has been described with reference to the preferred embodiments, various modifications to this application and replacements of the components therein with equivalents can be made without departing from the scope of this application. In particular, as long as there is no structural conflict, the various technical features mentioned in the embodiments can be combined in any manner. This application is not limited to the specific embodiments disclosed in this specification but includes all technical solutions falling in the scope of the claims.

## Claims

1. A battery cell (20), **characterized by** comprising:
a first wall (21a), wherein the first wall (21a) is provided with a first limiting structure (201); and
an insulating structure (22), wherein the insulating structure (22) is disposed on a side of the first wall (21a) facing the interior of the battery cell (20); the insulating structure (22) is provided with a second limiting structure (202) corresponding to the first limiting structure (201); and the second limiting structure (202) and the first limiting structure (201) cooperate with each other to prevent relative movement between the insulating structure (22) and the first wall (21a).

2. The battery cell (20) according to claim 1, **characterized in that** the first limiting structure (201) comprises a first protrusion structure of the first wall (21a) protruding toward the insulating structure (22); and the second limiting structure (202) comprises a first groove structure of the insulating structure (22); wherein an opening of the first groove structure faces the first wall (21a), and the first protrusion structure is at least partially accommodated in the first groove structure; and/or
the first limiting structure (201) comprises a second groove structure of the first wall (21a); an opening of the second groove structure faces the insulating structure (22); the second limiting structure (202) comprises a second protrusion structure of the insulating structure (22) protruding toward the first wall (21a); and the second protrusion structure is at least partially accommodated in the second groove structure.

3. The battery cell (20) according to claim 2, **characterized in that** the first protrusion structure is a groove of the first wall (21a) that is recessed toward the insulating structure (22) and that protrudes from a surface of the first wall (21a) facing the interior of the battery cell (20); and/or
the second protrusion structure is a groove of the insulating structure (22) that is recessed toward the first wall (21a) and that protrudes from a surface of the insulating structure (22) far away from the interior of the battery cell (20).

4. The battery cell (20) according to claim 2 or 3, **characterized in that** the first groove structure protrudes from a surface of the insulating structure (22) facing the interior of the battery cell (20); and/or
the second groove structure protrudes from a surface of the first wall (21a) facing away from the interior of the battery cell (20).

5. The battery cell (20) according to any one of claims 1 to 4, **characterized in that** the battery cell (20) further comprises:
an electrode terminal (214), disposed on the first wall (21a), wherein the first wall (21a) is provided with a first through hole (2101); the insulating structure (22) is provided with a second through hole (221) corresponding to the first through hole (2101); and the electrode terminal (214) runs through the first through hole (2101) and the second through hole (221), such that the first wall (21a) and the insulating structure (22) are riveted.

6. The battery cell (20) according to claim 5, **characterized in that** the battery cell (20) further comprises:
a connecting member (23), configured to be electrically connected to the electrode terminal (214), wherein the connecting member (23) is disposed on a side of the insulating structure (22) facing the interior of the battery cell (20); the connecting member (23) is provided with a third through hole (231) corresponding to the second through hole (221); and the electrode terminal (214) runs through the third through hole (231), such that the connecting member (23), the insulating structure (22), and the first wall (21a) are riveted.

7. The battery cell (20) according to claim 6, **characterized in that** the connecting member (23) further comprises a third limiting structure (232), wherein the third limiting structure (232) and the second limiting structure (202) cooperate with each other to prevent relative movement between the connecting member (23) and the insulating structure (22).

8. The battery cell (20) according to claim 7, **characterized in that** the third limiting structure (232) comprises a fourth through hole of the connecting member (23), wherein the fourth through hole is used for accommodating at least a portion of the second limiting structure (202).

9. The battery cell (20) according to any one of claims 5 to 8, **characterized in that** the battery cell (20) further comprises:
a sealing structure (24), disposed on a side of the first wall (21a) facing away from the interior of the battery cell (20), wherein the sealing structure (24) is configured to electrically isolate the electrode terminal (214) from the first wall (21a); and
the sealing structure (24) is provided with a fifth through hole (241); the fifth through hole (241) is at least partially accommodated in the first through hole (2101); and the electrode terminal (214) runs through the fifth through hole (241), such that the electrode terminal (214) and the first through hole (2101) are sealed.

10. The battery cell (20) according to any one of claims 5 to 9, **characterized in that** the electrode terminal (214) is a positive electrode terminal (214a).

11. The battery cell (20) according to any one of claims 5 to 10, **characterized in that** in a length direction of the first wall (21a), a value range of a ratio of a distance between the electrode terminal (214) and the first limiting structure (201) to length of the first wall (21a) is [10%, 48%].

12. The battery cell (20) according to any one of claims 1 to 11, **characterized in that** in a width direction of the first wall (21a), a value range of a ratio of a size of the first limiting structure (201) to width of the first wall (21a) is [15%, 95%].

13. The battery cell (20) according to any one of claims 1 to 12, **characterized in that** the battery cell (20) further comprises:
a housing body (211), wherein the housing body (211) is a hollow structure with an opening (2111); and
a cover plate (212), wherein the cover plate (212) is configured to cover the opening (2111) of the housing body (211).

14. The battery cell (20) according to claim 13, **characterized in that** the cover plate (212) is a largest wall of the battery cell (20).

15. The battery cell (20) according to claim 14, **characterized in that** a pressure relief mechanism (213) is provided on the cover plate (212); or
the pressure relief mechanism (213) is provided on a wall opposite the cover plate (212).

16. The battery cell (20) according to claim 15, **characterized in that** the pressure relief mechanism (213) is an L-shaped indentation provided on a surface of the battery cell (20) facing away from the interior of the battery cell (20).

17. The battery cell (20) according to any one of claims 13 to 16, **characterized in that** the first wall (21a) is a side wall of the housing body (211), and the side wall of the housing body (211) is a wall adjacent to the opening (2111) of the housing body (211).

18. The battery cell (20) according to any one of claims 1 to 17, **characterized in that** the first wall (21a) is a smallest wall of the battery cell (20).

19. The battery cell (20) according to any one of claims 1 to 18, **characterized in that** the first wall (21a) is made of stainless steel and/or alloy.

20. The battery cell (20) according to any one of claims 1 to 19, **characterized in that** a value range of thickness of the first wall (21a) is [50 µm, 200 µm].

21. A battery, **characterized by** comprising:
multiple battery cells (20) according to any one of claims 1 to 20.

22. An electric device, **characterized by** comprising:
multiple battery cells (20) according to any one of claims 1 to 20, wherein the battery cells (20) are configured to supply electrical energy to the electric device.
